# FASCICULE DE BREVET EUROPEEN

(11) **EP 2 834 436 B1**
(45) Date de publication et mention de la délivrance du brevet: **02.01.2019**
(21) Numéro de dépôt: 13715369.8
(22) Date de dépôt: 21.03.2013
(51) Int. Cl.: E05B 79/04, E05B 17/20, E05B 77/04

(54) **RENFORT DE SERRURE CONTREVENTE POUR UNE PORTE DE VÉHICULE AUTOMOBILE, PORTE ÉQUIPÉE D'UN TEL RENFORT ET VÉHICULE ÉQUIPE D'UNE TELLE PORTE**
VERSTREBTE SCHLOSSVERSTÄRKUNG FÜR EINE KRAFTFAHRZEUGTÜR, TÜR MIT EINER SOLCHEN VERSTÄRKUNG UND FAHRZEUG MIT EINER SOLCHEN TÜR
BRACED LOCK REINFORCEMENT FOR A MOTOR VEHICLE DOOR, DOOR EQUIPPED WITH SUCH A REINFORCEMENT AND VEHICLE EQUIPPED WITH SUCH A DOOR

(30) Priorité: 05.04.2012 FR 1253167
(43) Date de publication de la demande: 11.02.2015
(73) Titulaire: PSA Automobiles SA, 78300 Poissy (FR)
(72) Inventeur: BOUQUIN, Gregory, F-25260 Saint Maurice Colombier (FR)
(86) Numéro de dépôt international: PCT/FR2013/050613
(87) Numéro de publication internationale: WO 2013/150210

(56) Documents cités:
- EP-A2- 1 148 187
- WO-A1-2012/038651
- DE-A1- 19 825 919
- FR-A1- 2 959 767
- GB-A- 2 321 920
- US-A1- 2003 116 979

## Description

L'invention a trait au domaine de l'automobile, et plus précisément à la tenue au choc des ouvrants, notamment des portes latérales.

Les préconisations des normes internationales et européennes (CEE-ONU) en matière de tenue des portes aux chocs sont strictes. S'agissant des serrures en particulier, le règlement n°11 CEE-ONU « *Prescriptions uniformes relatives à l'homologation des véhicules en ce qui concerne les serrures et organes de fixation des portes* », exige (point 6.1.4.1 du règlement) que « *tout système de fermeture primaire ou auxiliaire de portes à charnières doit rester en position complètement fermée lorsqu'il est soumis à une force d'inertie de 30 g, y compris lorsque cette force est appliquée sur la serrure proprement dite et sur son mécanisme d'actionnement, parallèlement aux axes longitudinal et transversal du véhicule* ».

Cette exigence part du constat que l'ouverture inopinée d'une porte lors d'un choc frontal ou latéral en raison du défaut de tenue de sa serrure annule l'effet barrière normalement assuré par la porte, et expose par conséquent les occupants du véhicule à de graves dommages corporels.

Les serrures ordinaires étant aujourd'hui majoritairement constituées de composants en matière plastique (pour des raisons de coût et de poids), il est connu de les rigidifier par l'ajout d'équerres métalliques, cf. par ex. la demande de brevet DE 198 25 919.

Mais, malgré l'adjonction de ce type d'équerre, les serrures demeurent exposées aux risques de déformation en cas de choc, typiquement dans les conditions énoncées ci-dessus.

Un premier objectif est d'améliorer la sécurité des passagers des véhicules automobiles.

Un deuxième objectif est de rendre les ouvrants des véhicules automobiles plus résistants aux chocs, en particulier aux chocs latéraux.

Un troisième objectif est de renforcer plus efficacement la tenue des serrures aux chocs.

Un quatrième objectif est de limiter la déformation des serrures en cas de choc, notamment dans les conditions du règlement précité.

Il est proposé, en premier lieu, un renfort de serrure d'un ouvrant de véhicule automobile, destiné à être interposé entre une serrure et une doublure de l'ouvrant, ce renfort comprenant une platine frontale de montage de la serrure, destinée à être appliquée par l'intérieur contre un chant de la doublure, et un retour latéral en équerre destiné à être appliqué contre une face latérale de la doublure, ce renfort comprenant au moins un raidisseur de contreventement interposé obliquement entre la platine et le retour en équerre. Le renfort est caractérisé en ce que le raidisseur est nervuré, ladite nervure formant un Y.

Le raidisseur accroît considérablement la résistance du renfort à la déformation, notamment en cas de choc latéral. Il en résulte une protection accrue de la serrure, qui peut maintenir en cas de choc sa fonction de verrouillage de l'ouvrant, au bénéfice de la sécurité des passagers.

Diverses caractéristiques supplémentaires peuvent être prévues, seules ou en combinaison :
- le raidisseur est rapporté ;
- le raidisseur est solidaire, par une première extrémité, d'une patte frontale formée à l'équerre à partir de la platine, et, par une deuxième extrémité, d'une patte latérale formée à l'équerre à partir du retour latéral ;
- le raidisseur est fixé aux pattes par soudure électrique ;
- les pattes sont formées à partir de bords inférieurs respectifs de la platine et du retour latéral ;
- le raidisseur s'étend suivant une direction générale formant avec la platine un angle de 20° environ.

Il est proposé, en deuxième lieu, une porte de véhicule automobile comprenant une doublure de porte, et équipée d'une serrure et d'un renfort de serrure tel que présenté ci-dessus, interposé entre la serrure et la doublure de porte sur un chant de celle-ci.

Il est proposé, en troisième lieu, un véhicule automobile équipé d'une telle porte.

D'autres objets et avantages de l'invention apparaîtront à la lumière de la description d'un mode préféré de réalisation, faite ci-après en référence aux dessins annexés dans lesquels :
- la figure 1 est une vue partielle en perspective montrant une porte de véhicule comprenant une doublure de porte sur laquelle est destinée à être montée une serrure avec interposition d'un renfort de serrure, dont un détail est représenté en encart ;
- la figure 2 est une vue partielle en perspective montrant la serrure et le renfort assemblés sur le panneau de porte ;
- la figure 3 est une vue de dessus du renfort de serrure avec, en pointillés, la serrure montée sur le renfort.

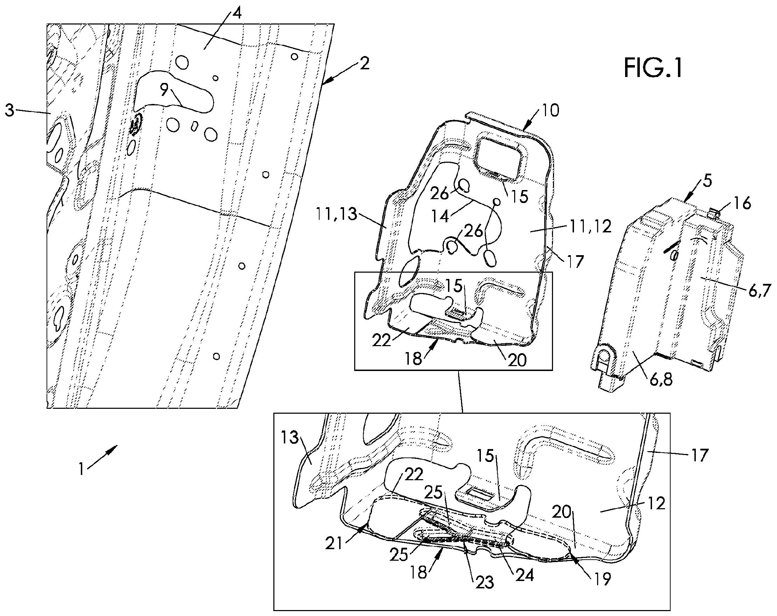

Sur la figure 1 est partiellement représenté, en éclaté, un ouvrant **1** d'un véhicule automobile, en l'espèce une porte latérale. La porte **1** comprend une doublure **2** de porte, qui comprend une face **3** latérale destinée, en position fermée de la porte **1,** à s'étendre à la fois longitudinalement et verticalement sur un côté de l'habitacle du véhicule, et un chant **4** plié sensiblement à angle droit par rapport à la face **3** latérale.

La porte **1** comprend par ailleurs une serrure **5,** destinée à être montée dans la doublure **2** de porte du côté du chant **4.** La serrure **5** comprend un boîtier **6** dans lequel est monté un verrou mobile (non visible sur les figures) apte à coopérer par crochetage avec un fil de gâche solidaire d'une embrasure de porte définie par la caisse du véhicule. Comme on le voit sur les figures, le boîtier **6** comprend, de manière classique, deux parties sensiblement plates qui s'étendent à angle droit l'une de l'autre, à savoir une partie **7** frontale, qui accueille le verrou, et une partie **8** latérale, qui accueille le mécanisme d'actionnement du verrou et l'électronique de commande centralisée d'ouverture et fermeture.

Afin de permettre le passage et le crochetage du fil de gâche en position fermée de la porte, le chant **4** présente, à la jonction avec la face **3** latérale, une découpe **9** au droit de laquelle est destinée à être montée la serrure **5.**

La porte **1** comprend en outre un renfort **10** de serrure comprenant un corps **11** monobloc formant une platine **12** frontale de montage de la serrure, destinée à être appliquée par l'intérieur contre le chant **4** de la doublure **2,** et un retour **13** latéral en équerre formé à partir d'un bord latéral interne de la platine **12** et destiné à être appliqué contre la face **3** latérale de la doublure **2.**

Le corps **11** est par exemple formé par découpe et pliage d'une tôle d'acier. Comme on le voit sur la figure 1, le corps **11** comprend une échancrure **14** découpée dans la platine **12** et dans le retour **13** latéral, à cheval sur leur jonction, pour le passage du fil de gâche lors de la fermeture de la porte **1.**

La platine **12** est pourvue de griffes **15** en saillie, munies de découpes avec lesquelles sont destinées à coopérer des agrafes **16** formées sur le boîtier **6** de la serrure **5** pour le montage par encliquetage de celle-ci sur la platine **12.**

Selon un mode particulier de réalisation illustré sur la figure 1, la platine **12** présente, à l'opposé du retour **13** en équerre, un bord **17** latéral externe replié en équerre.

Le renfort **10** est muni d'au moins un raidisseur **18** de contreventement interposé obliquement, à la manière d'un jambage d'équerre, entre la platine **12** et le retour **13** en équerre. Ce raidisseur **18** a pour fonction de rigidifier le renfort **10** pour le rendre plus résistant à la déformation, notamment lors de l'application d'efforts de compression transversale (parallèlement à la platine **12** et perpendiculairement au retour **13** en équerre) générés lors d'un choc latéral. Dans l'exemple illustré, le raidisseur **18** s'étend dans un plan perpendiculaire à la fois au plan de la platine **12** et au plan du retour **13** en équerre, suivant une direction générale formant avec la platine **12** un angle de 20° environ, cette orientation maximisant la raideur du renfort **10.**

Selon un mode de réalisation préféré, illustré sur les figures, et plus particulièrement visible dans l'encart de la figure 1, le renfort **10** comprend un unique raidisseur **18.** Celui-ci peut se présenter sous forme d'une pièce métallique rapportée, plate, oblongue, solidarisée au corps **11** notamment par soudure électrique.

Comme on le voit sur la figure 1, le raidisseur **18** est par exemple solidaire, par une première extrémité **19** (en pointillés dans l'encart de la figure 1), d'une patte **20** frontale formée à l'équerre à partir d'un bord inférieur de la platine **12,** et, par une deuxième extrémité **21** (également en pointillés dans l'encart de la figure 1) d'une patte **22** latérale formée à l'équerre à partir d'un bord inférieur du retour **13** latéral. La fixation du raidisseur **18** aux pattes **20, 22** est par exemple réalisée au moyen de points de soudure électrique.

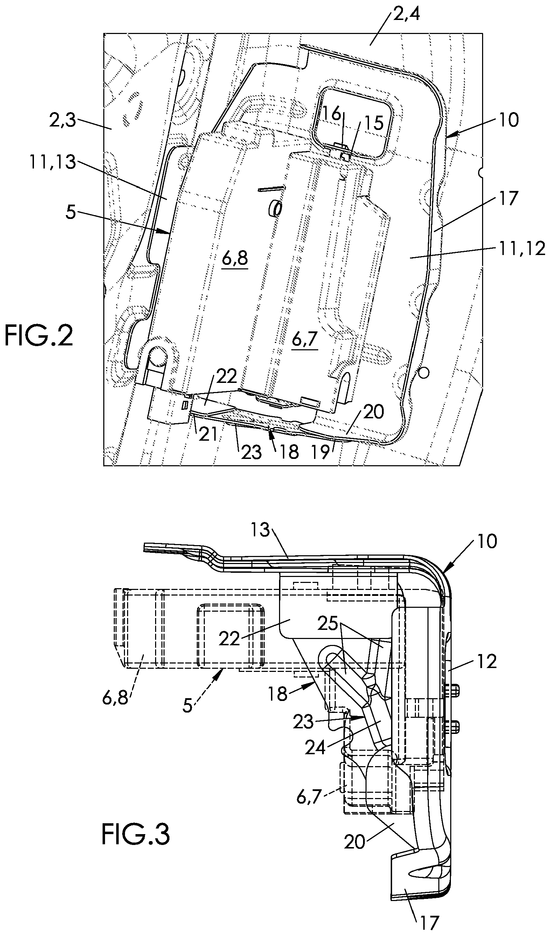

Comme on le voit sur les figures 1 et 3, le raidisseur **18** est nervuré, aux fins de rigidité. Plus précisément, le raidisseur **18** présente une nervure **23** en Y, comprenant une jambe **24** droite du côté de la platine **12,** et deux bras **25** ouverts en V, du côté du retour **13** en équerre. Cette nervure **23,** formée par exemple par emboutissage, confère au raidisseur **18** une excellente résistance à la flexion et au flambage.

L'assemblage est réalisé simplement : la serrure **5** est montée dans le renfort **10** par encliquetage du boîtier **6** sur la platine **12,** les agrafes **16** déformables venant se prendre dans les griffes **15** de la platine **12.**

Puis l'ensemble ainsi constitué est monté par l'intérieur dans la doublure **2** de porte, à la jonction entre le chant **4** et la face **3** latérale, avec l'échancrure **14** positionnée au droit de la découpe **9.**

Puis la serrure **5** est fixée à la doublure **2** de porte au moyen de vis qui viennent se prendre dans le boîtier **6** au travers de la platine **12** qui, à cet effet, est percée de trous **26** autour de l'échancrure **14.**

Le raidisseur **18** confère au renfort **10** une résistance accrue à la déformation, notamment en cas de choc latéral. La fonction de contreventement assurée par le raidisseur **18** s'oppose au repliement de la platine **12** sur le retour **13** en équerre, maintenant sensiblement constant l'angle droit entre eux.

Il en résulte une protection de la serrure **5** contre l'écrasement, qui pourrait provoquer un basculement de la partie **7** frontale du boîtier **6** contre la partie **8** latérale à la manière d'un portefeuille, et dégagerait le verrou de la gâche, provoquant ainsi l'ouverture inopinée de la porte **1.**

Cet évènement étant évité, la tenue de la serrure **5** aux chocs est renforcée, et la résistance de la porte **1** aux chocs latéraux s'en trouve notablement accru, au bénéfice de la sécurité des passagers.

## Revendications

1. Renfort (**10**) de serrure d'un ouvrant (**1**) de véhicule automobile, destiné à être interposé entre une serrure (**5**) et une doublure (**2**) de l'ouvrant (**1**), ce renfort (**10**) comprenant une platine (**12**) frontale de montage de la serrure (**5**), destinée à être appliquée par l'intérieur contre un chant (**4**) de la doublure (**2**), et un retour (**13**) latéral en équerre destiné à être appliqué contre une face (**3**) latérale de la doublure (**2**), ce renfort (**10**) comprenant au moins un raidisseur (**18**) de contreventement interposé obliquement entre la platine (**12**) et le retour (**13**) en équerre, **caractérisé en ce que** le raidisseur (**18**) est nervuré, ladite nervure (**23**) formant un Y.

2. Renfort (**10**) selon la revendication 1, **caractérisé en ce que** le raidisseur (**18**) est rapporté.

3. Renfort (**10**) selon la revendication 2, **caractérisé en ce que** le raidisseur (**18**) est solidaire, par une première extrémité (**19**), d'une patte (**20**) frontale formée à l'équerre à partir de la platine (**12**), et, par une deuxième extrémité (**22**), d'une patte (**22**) latérale formée à l'équerre à partir du retour (**13**) latéral.

4. Renfort (**10**) selon la revendication 3, **caractérisé en ce que** le raidisseur (**18**) est fixé aux pattes (**20, 22**) par soudure électrique.

5. Renfort (**10**) selon la revendication 3 ou la revendication 4, **caractérisé en ce que** les pattes (**20, 22**) sont formées à partir de bords inférieurs respectifs de la platine (**12**) et du retour (**13**) latéral.

6. Renfort (**10**) selon l'une des revendications précédentes, **caractérisé en ce que** le raidisseur (**18**) s'étend suivant une direction générale formant avec la platine (**12**) un angle de **20°** environ.

7. Porte (**1**) de véhicule automobile comprenant une doublure (**2**) de porte, et équipée d'une serrure (**5**) et d'un renfort (**10**) de serrure selon l'une des revendications précédentes, interposée entre la serrure (**5**) et la doublure (**2**) de porte sur un chant (**4**) de celle-ci.

8. Véhicule automobile équipé d'une porte (**1**) selon la revendication 7.

## Patentansprüche

1. Verstärkung (10) für ein Schloss einer Kraftfahrzeugtür (1), die dazu vorgesehen ist, zwischen einem Schloss (5) und einer Verkleidung (2) der Tür (1) eingesetzt zu werden, wobei diese Verstärkung (10) eine vordere Platte (12) zum Montieren des Schlosses (5) umfasst, die dazu vorgesehen ist, von der Innenseite her gegen eine Kante (4) der Verkleidung (2) angelegt zu werden, und einen gewinkelten seitlichen Rücksprung (13), der dazu vorgesehen ist, gegen eine seitliche Fläche (3) der Verkleidung (2) angelegt zu werden, wobei diese Verstärkung (10) mindestens eine Verbandversteifung (18) umfasst, die schräg zwischen der Platte (12) und dem gewinkelten Rücksprung (13) eingesetzt ist, **dadurch gekennzeichnet, dass** die Versteifung (18) gerippt ist, wobei die Rippe (23) ein Y bildet.

2. Verstärkung (10) nach Anspruch 1, **dadurch gekennzeichnet, dass** die Versteifung (18) aufgesetzt ist.

3. Verstärkung (10) nach Anspruch 2, **dadurch gekennzeichnet, dass** die Versteifung (18) über ein erstes Ende (19) fest mit einer vorderen Lasche (20) verbunden ist, die von der Platte (12) aus am Winkel gebildet ist, und über ein zweites Ende (22) mit einer seitlichen Lasche (22), die vom seitlichen Rücksprung (13) aus am Winkel gebildet ist.

4. Verstärkung (10) nach Anspruch 3, **dadurch gekennzeichnet, dass** die Versteifung (18) durch Elektroschweißen an den Laschen (20, 22) befestigt ist.

5. Verstärkung (10) nach Anspruch 3 oder Anspruch 4, **dadurch gekennzeichnet, dass** die Laschen (20, 22) von jeweiligen unteren Rändern der Platte (12) und des seitlichen Rücksprungs (13) aus gebildet sind.

6. Verstärkung (10) nach einem der vorstehenden Ansprüche, **dadurch gekennzeichnet, dass** sich die Versteifung (18) in eine allgemeine Richtung erstreckt, die mit der Platte (12) einen Winkel von etwa 20° bildet.

7. Kraftfahrzeugtür (1), die eine Türverkleidung (2) umfasst und mit einem Schloss (5) und mit einer Schlossverstärkung (10) nach einem der vorstehenden Ansprüche ausgestattet ist, welche zwischen dem Schloss (5) und der Türverkleidung (2) an einer Kante (4) derselben eingesetzt ist.

8. Kraftfahrzeug, das mit einer Tür (1) nach Anspruch 7 ausgestattet ist.

## Claims

1. Lock reinforcement (10) for a motor vehicle opening (1), intended to be inserted between a lock (5) and a lining (2) of the opening (1), this reinforcement (10) comprising a front plate (12) for mounting the lock (5), intended to be applied internally against an edge (4) of the lining (2), and a square side return (13) intended to be applied against a side face (3) of the lining (2), this reinforcement (10) comprising at least one bracing stiffener (18) inserted obliquely between the plate (12) and the square return (13), **characterised in that** the stiffener (18) is ribbed, said rib (23) forming a Y-shape.

2. Reinforcement (10) according to claim 1, **characterised in that** the stiffener (18) is included.

3. Reinforcement (10) according to claim 2, **characterised in that** the stiffener (18) is secured, by a first end (19), to a front lug (20) formed square from the plate (12), and by a second end (22) of a side lug (22) formed square from the side return (13).

4. Reinforcement (10) according to claim 3, **characterised in that** the stiffener (18) is fixed to the lugs (20, 22) by electrical welding.

5. Reinforcement (10) according to claim 3 or claim 4, **characterised in that** the lugs (20, 22) are formed from respective lower edges of the plate (12) and of the side return (13).

6. Reinforcement (10) according to one of the preceding claims, **characterised in that** the stiffener (18) extends along a general direction forming with the plate (12), an angle of around 20°.

7. Motor vehicle door (1) comprising a door lining (2), and equipped with a lock (5) and a lock reinforcement (10) according to one of the preceding claims, inserted between the lock (5) and the door lining (2) on an edge (4) of it.

8. Motor vehicle equipped with a door (1) according to claim 7.
